# EUROPÄISCHE PATENTSCHRIFT

(11) **EP 2 236 846 B1**
(45) Veröffentlichungstag und Bekanntmachung des Hinweises auf die Patenterteilung: **14.08.2013**
(21) Anmeldenummer: 10003400.8
(22) Anmeldetag: 30.03.2010
(51) Int. Cl.: F16C 33/37, F16C 33/66

(54) **Wälzlager**
Rolling bearing
Palier à roulement

(30) Priorität: 02.04.2009 DE 102009016017
(43) Veröffentlichungstag der Anmeldung: 06.10.2010
(73) Patentinhaber: AB SKF, 415 50 Göteborg (SE)
(72) Erfinder: Grüll, Robert, 97528 Sulzdorf (DE); Heemskerk, Rut, 97490 Poppenhausen (DE); Reichert, Jürgen, 3350 Haag (AT); Pampel, Stefan, 97437 Haßfurt (DE); Volkmuth, Markus, 97537 Wipfeld (DE)
(74) Vertreter: Schonecke, Mitja

(56) Entgegenhaltungen:
- EP-A1- 1 921 333
- DE-A1- 4 236 847
- DE-U1- 9 301 764
- JP-A- 2007 232 186

## Beschreibung

Die Erfindung betrifft ein Wälzlager mit zwischen jeweils zwei benachbarten Wälzkörpern angeordnetem Halteelement, wobei die Wälzkörper zwischen einem Innenring und einem Außenring des Wälzlagers angeordnet sind, wobei der Innenring eine Innenringlaufbahn mit einem inneren Radius aufweist, wobei der Außenring eine Außenringlaufbahn mit einem äußeren Radius aufweist, wobei die Wälzkörper mit ihren Mittelpunkten auf einem Teilkreisradius angeordnet sind, wobei sich das Halteelement vom Teilkreisradius aus über mindestens 90 % der Differenz zwischen Teilkreisradius und innerem Radius radial nach innen erstreckt und vom Teilkreisradius aus über höchstens 50 % der Differenz zwischen äußerem Radius und Teilkreisradius radial nach außen erstreckt.

Ein Halteelement dieser Art ist beispielsweise aus der EP 1 921 333 A1, dass die Merkmale des Oberbegriffs un Anspruch 1 zeigt, aus der DE 93 01764 U1, aus der JP 2007 232186 A und aus der DE 42 36 847 A1 bekannt. Im Unterschied zu klassischen Wälzlagerkäfigen wird hier eine Führung der Wälzkörper in einem Wälzlager dadurch bewerkstelligt, dass in Umfangsrichtung zwischen die einzelnen Wälzkörper Halteelemente eingesetzt werden. Weitere Lösungen zeigen die DE 101 01 054 B4 und die DE 101 64 867 B4.

Die genaue Ausgestaltung der Halteelemente und insbesondere deren Flächen, die mit Teilen des Lagers im Betrieb Gleitkontakt haben, muss dabei unter dem Gesichtspunkt erfolgen, dass die entstehende Reibung minimal ist und optimale Schmierverhältnisse aufrecht erhalten werden. Die Halteelemente sollen dabei den direkten Kontakt zwischen den Wälzkörpern vermeiden und so zu einem optimalen Betrieb führen.

Die vorbekannten Halteelemente zeigen diesbezüglich teilweise noch keine voll befriedigenden Eigenschaften.

Der Erfindung liegt daher die **Aufgabe** zu Grunde, ein Halteelement der eingangs genannten Art so fortzubilden, dass verbesserte Eigenschaften im Betrieb erzielt werden. Insbesondere sollen die Schmierbedingungen im Wälzlager so verbessert werden, dass ein möglichst reibungsarmer Betrieb sichergestellt werden kann.

Die **Lösung** dieser Aufgabe durch die Erfindung ist dadurch gekennzeichnet, dass das Halteelement in seinen axialen Endbereichen Abschnitte aufweist, die zur Anlage der Wälzkörper ausgebildet sind, wobei es in einem axialen Mittenbereich zwischen den Abschnitten zumindest teilweise gegenüber der Wälzkörperoberfläche zurückgesetzt und ausgespart ist, wobei der Mittenbereich in Richtung des Umfangs des Wälzlagers gesehen eine bogenförmige Ausgestaltung aufweist, wobei der Bogen der bogenförmigen Ausgestaltung vorzugsweise ein Kreisbogen ist.

Bevorzugt erstreckt sich das Halteelement bei bestimmungemäßem Gebrauch vom Teilkreisradius aus über 100 % der Differenz zwischen Teilkreisradius und innerem Radius radial nach innen. In diesem Falle kann das Halteelement an der Innenringlaufbahn anliegen und sich im Stillstand des Lagers hier abstützen.

Das Halteelement hat bevorzugt an seinen den Wälzkörpern zugewandten Seiten konkave kreisbogenförmige Anlageflächen für die Wälzkörper, die einen geringfügig größeren Krümmungsradius aufweisen als der Radius der Wälzkörper; der Krümmungsradius der Anlageflächen entspricht mit Vorteil 110 % bis 125 % des Radius der Wälzkörper.

In die konkaven kreisbogenförmigen Anlageflächen kann mindestens eine Ausnehmung eingebracht sein. In dieser kann sich Schmierstoff (Fett) sammeln und damit die Schmierung des Lagers verbessern. Diese Ausnehmung hat dabei bevorzugt - in Richtung des Umfangs des Wälzlagers gesehen - eine rechteckförmige Gestalt.

Das Halteelement kann weiterhin in seinem der Innenringlaufbahn zugewandten Bereich zumindest teilweise eine konkave Form aufweisen. Die konkave Form weist dabei bevorzugt einen Krümmungsradius auf, der geringfügig kleiner ist als der innere Radius der Imenringlaufbahn.

In dem Bereich der konkaven Form kann wiederum mindestens eine Kavität ausgebildet sein, die zur Aufnahme von Schmiermittel vorgesehen ist. Die Kavität weist bevorzugt in radiale Richtung betrachtet eine rechteckige Form auf.

Der Mittenbereich ist dabei bevorzugt als Steg (konstanter Dicke) ausgebildet, der die beiden Abschnitte miteinander verbindet. Der Steg kann weiterhin über einen Teil seiner radialen Höhe, vorzugsweise höchstens über die Hälfte seiner radialen Höhe, einen Abschnitt aufweisen, der zur Anlage der Wälzkörper ausgebildet ist.

Dann hat es sich als sehr vorteilhaft erwiesen, dass der Mittenbereich - in Richtung des Umfangs des Wälzlagers gesehen - eine bogenförmige Ausgestaltung aufweist. Der Bogen dieser bogenförmigen Ausgestaltung ist dabei beispielsweise ein Kreisbogen.

Das Halteelement besteht bevorzugt aus Kunststoff, wobei insbesondere an Polyamid (PA) oder an Polyetheretherketon (PEEK) gedacht ist. Bewährt hat sich auch die Verwendung des Kunststoffes Polphthalamid (PPA). In das Kunststoffmaterial können Verstärkungselemente eingelagert sein. Die Verstärkungselemente können Glaskugeln oder Glasfasern sein. Weiterhin kann vorgesehen werden, dass Polytetrafluoräthylen (PTFE) oder Graphit in das Material eingelagert werden.

Das Halteelement ist bevorzugt durch Spritzgießen hergestellt und einstückig ausgeführt. Es ist aber auch eine Herstellung des Halteelements beispielsweise durch Fräsen möglich und wirtschaftlich.

Die Erfindung kommt bevorzugt in einem Zylinderrollenlager zum Einsatz, in das die erläuterten Halteelemente eingebaut sind.

Mit der vorgeschlagenen Ausgestaltung eines Halteelements wird erreicht, dass insgesamt ein günstiges Reibverhalten erzielt wird, so dass das Lager reibungsarm betrieben werden kann. Die Halteelemente vermeiden einen direkten Kontakt zwischen den Wälzkörpern, wodurch das Anschmierungsrisiko zwischen den Wälzkörpern reduziert ist. Die einzelnen Wälzkörper werden hierdurch effizient separiert.

Die Halteelemente liegen lose zwischen den Wälzkörpern des Lagers und sind rollengeführt. Demgemäß tritt im Betrieb des Lagers üblicher Weise kein Kontakt der Halteelemente mit den Laufbahnen des Lagers auf. Bei Stillstand des Lagers stützen sich die Halteelemente auf der Innenringlaufbahn ab. Zur axialen Führung werden beidseitig Borde am Innenring angeordnet.

### In der Zeichnung sind Ausführungsbeispiele der Erfindung dargestellt. Es zeigen:

- Fig. 1: einen Schnitt durch einen Teil eines Zylinderrollenlagers, wobei der Schnitt senkrecht auf der Achse a des Lagers steht,
- Fig. 2: in perspektivischer Darstellung ein Halteelement gemäß einer ersten Ausführungsform der Erfindung, das zwischen zwei (nicht dargestellten) Wälzkörpern des Lagers gemäß Fig. 1 angeordnet ist,
- Fig. 3: in perspektivischer Darstellung ein Halteelement gemäß einer zweiten Ausführungsform der Erfindung, das zwischen zwei (nicht dargestellten) Wälzkörpern des Lagers gemäß Fig. 1 angeordnet ist,
- Fig. 4: das Halteelement gemäß Fig. 3 in perspektivischer Darstellung, gesehen aus einer anderen Richtung,
- Fig. 5: das Halteelement gemäß Fig. 3 bzw. Fig. 4 in der Vorderansicht, gesehen in Umfangsrichtung des Lagers,
- Fig. 6: das Halteelement gemäß Fig. 3 bzw. Fig. 4 in der Seitenansicht im Schnitt A-B gemäß Fig. 5 und
- Fig. 7: das Halteelement gemäß Fig. 3 bzw. Fig. 4 in der Ansicht von unten.

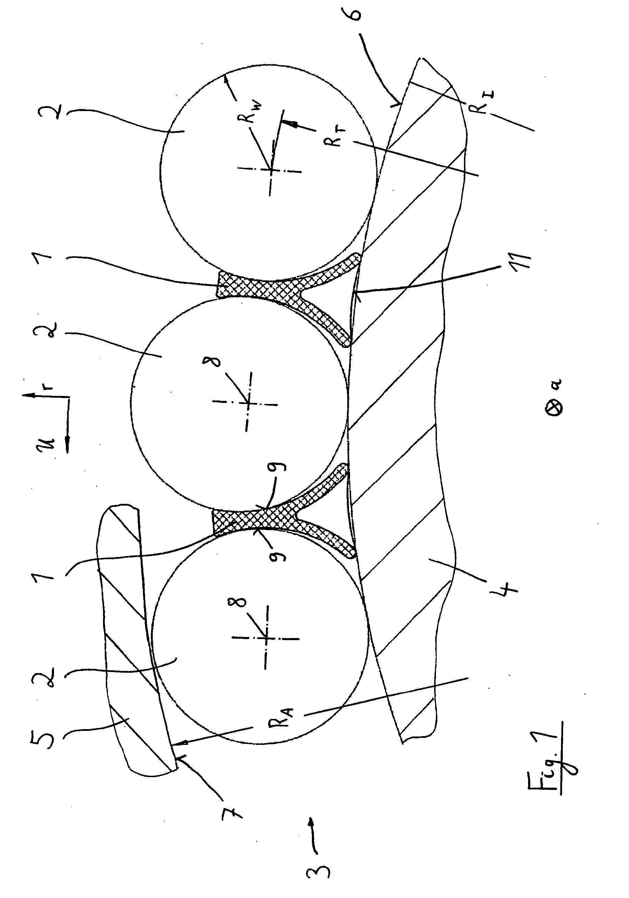

In Fig. 1 ist ein Wälzlager 3 in Form eines Zylinderrollenlagers ausschnittsweise dargestellt, das einen Innenring 4 mit einer Innenringlaufbahn 6 und einen Außenring 5 mit einer Außenringlaufbahn 7 aufweist. Zwischen den Lagerringen 4, 5 sind Wälzkörper 2 in Form von Zylinderrollen mit einem Rollenradius R_{W} angeordnet. Die Führung der Rollen 2 zueinander erfolgt hier nicht durch einen klassischen Käfig, sondern durch eine Anzahl Halteelemente 1, die der Anzahl der Wälzkörper 2 entsprechend im Lager 3 eingebaut sind. Dabei ist ein jedes Halteelement 1 zwischen zwei Wälzkörpern 2 angeordnet.

Die Außenringlaufbahn 7 weist einen äußeren Radius R_{A} auf, die Innenringlaufbahn 6 einen inneren Radius R_{I}. Die Wälzkörper 2 laufen mit ihren Mittelpunkten 8 auf einem Teilkreis, der den Teilkreisradius R_{T} aufweist.

Die Halteelemente 1 haben zur Führung der Wälzkörper 2 konkave kreisbogenförmige Anlageflächen 9.

Wesentlich ist, dass sich das Halteelement 1 bei bestimmungemäßem Gebrauch vom Teilkreisradius R_{T} aus über mindestens 90 % der Differenz R_{T} - R_{I} zwischen Teilkreisradius R_{T} und innerem Radius R_{I} radial (in Richtung r) nach innen erstreckt. Bevorzugt ist sogar vorgesehen, dass sich die Erstreckung über 100 % der genannten Differenz ausdehnt, d. h. bis zur Innenringlaufbahn 6. Andererseits ist vorgesehen, dass sich das Halteelement 1 vom Teilkreisradius R_{T} aus über höchstens 50 % der Differenz R_{A} - R_{T} zwischen äußerem Radius R_{A} und Teilkreisradius R_{T} radial nach außen erstreckt. Hierdurch ergibt sich - wie es aus der Figur 1 ersichtlich ist - eine etwa dreieckförmige Querschnittsform des Halteelements 1, die sich nur knapp über den Teilkreis radial nach außen erstreckt.

Im Betrieb liegt kein Kontakt der Halteelemente 1 mit der Innenringlaufbahn 6 vor, sondern reine Rollenführung der Wälzkörper 2. Im Stillstand des Lagers ist indes eine Kontaktnahme der Halteelemente 1 mit der Innenringlaufbahn 6 möglich und vorgesehen. Hierfür weisen die Halteelemente 1 an ihrer der Innenringlaufbahn 6 zugewandten Seite eine konkave Form 11 auf, die etwas stärker gekrümmt ist, als es dem inneren Radius R_{I} entsprechen würde.

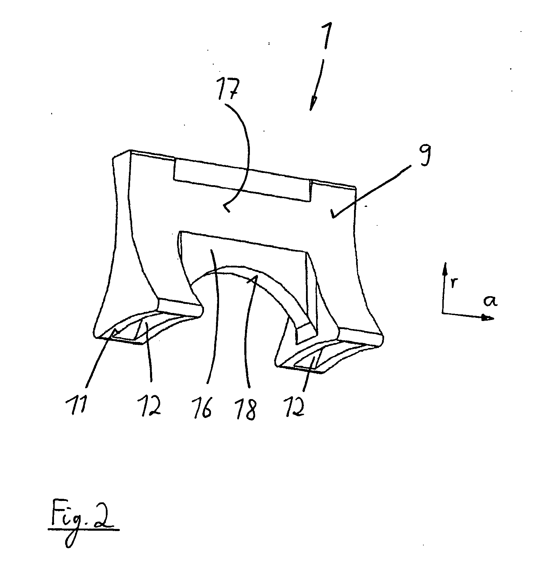

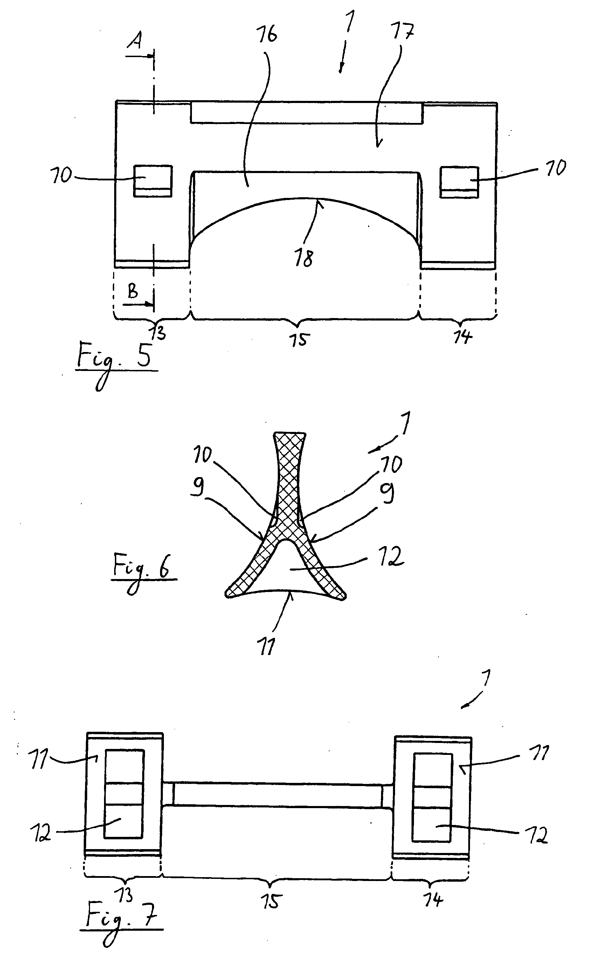

Weitere Details des Halteelements 1 sind in Fig. 2 illustriert. Zu erwähnen ist hier insbesondere ein dreigliedriger Aufbau des Halteelements 1, nämlich ein solcher, der aus drei Abschnitten besteht, die in Fig. 5 und Fig. 7 eingezeichnet sind. Demgemäß weist das Halteelement 1 in seinen axialen Endbereichen Abschnitte 13 und 14 auf, die über einen Mittenbereich 15 miteinander verbunden sind.

Während die Abschnitte 13 und 14 über die gesamte radiale Höhe die konkaven Anlageflächen 9 für die Wälzkörper aufweisen, ist dies im Mittenbereich 15 nicht der Fall. Hier ist nur ein Abschnitt 17 vorhanden, der die konkave Anlagefläche darstellt, während im restlichen Teil des Mittenbereichs 15 das Material des Halteelements 1 zurückgenommen, d. h. zurückversetzt ist, so dass hier keine Kontaktnahme mit dem Wälzkörper gegeben ist.

Dadurch wird eine leichte Bauweise des Halteelements 1 erreicht.

Sowohl eine leichte Bauweise als auch eine optimale Schmierung des Lagers wird ermöglicht, wenn der Mittenbereich teilweise als Steg 16 ausgeführt ist, der in Umfangsrichtung U eine konstante Dicke hat. Der Steg 16 ist ferner, sowohl zur Gewichtsreduzierung als auch, um hinreichend Schmiermittel zu speichern, mit einer bogenförmigen Ausgestaltung 18 versehen, die kreisbogenförmig sein kann.

Wie in Fig. 2 des Weiteren gesehen werden kann, sind in der der Innenringlaufbahn 6 zugewandten konkaven Form 11 Kavitäten 12 eingebracht. Diese haben in vorteilhafter Weise zur Folge, dass sich hier Schmiermittel sammeln kann und zur Schmierung des Halteelements 1 gegenüber der Innenringlaufbahn 6 zur Verfügung steht.

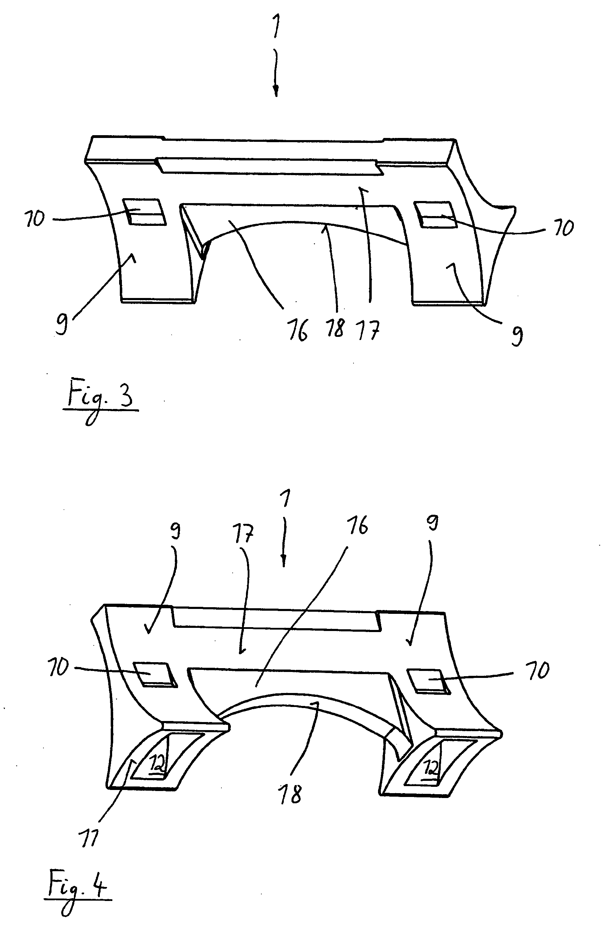

Eine ähnliche Ausgestaltung des Halteelements 1 ergibt sich aus den Figuren 3 bis 7.

Erwähnenswert sind hier Ausnehmungen 10, die in die konkaven Anlageflächen 9 eingebracht sind und die - wie die Kavitäten 12 - eine Sammlung von Schmiermittel sicherstellen, so dass dieses für die Schmierung der Wälzkörper 2 an den Anlageflächen 9 zur Verfügung steht.

Ansonsten entspricht die konzeptionelle Struktur derjenigen gemäß Fig. 2. Die bogenförmige Ausgestaltung 18 ist hier allerdings etwas flacher gehalten als in Fig. 2.

Grundsätzlich lassen sich die Halteelemente 1 auch für eine Führung am Außenring 5 des Lagers 3 ausgestalten. In diesem Falle wird die oben beschriebene Struktur am Teilkreis gespiegelt, d. h. die Halteelemente 1 erstrecken sich dann radial (weitgehend) vollständig über den Bereich zwischen Teilkreis und Außenringlaufbahn und nur über maximal 50 %, vorzugsweise ungefähr über 33 %, der Erstreckung zwischen dem Teilkreis und der Innenringlaufbahn.

Das vorgeschlagene Halteelement kann sowohl für die Führung an der Außenlaufbahn als auch an der Innenlaufbahn vorgesehen werden.

### Bezugszeichenliste

- 1: Halteelement
- 2: Wälzkörper (Zylinderrolle)
- 3: Wälzlager (Zylinderrollenlager)
- 4: Innenring
- 5: Außenring
- 6: Innenringlaufbahn
- 7: Außenringlaufbahn
- 8: Mittelpunkt des Wälzkörpers
- 9: konkave kreisbogenförmige Anlagefläche
- 10: Ausnehmung
- 11: konkave Form
- 12: Kavität
- 13: Abschnitt
- 14: Abschnitt
- 15: Mittenbereich
- 16: Steg
- 17: Abschnitt
- 18: bogenförmige Ausgestaltung

- R₁: innerer Radius
- R_{A}: äußeren Radius
- R_{T}: Teilkreisradius
- R_{W}: Radius des Wälzkörpers
- a: Achsrichtung
- r: radiale Richtung
- U: Umfangsrichtung

## Patentansprüche

1. Wälzlager (3) mit zwischen jeweils zwei benachbarten Wälzkörpern (2) angeordnetem Halteelement (1), wobei die Wälzkörper (2) zwischen einem Innenring (4) und einem Außenring (5) des Wälzlagers (3) angeordnet sind, wobei der Innenring (4) eine Innenringlaufbahn (6) mit einem inneren Radius (R₁) aufweist, wobei der Außenring (5) eine Außenringlaufbahn (7) mit einem äußeren Radius (R_{A}) aufweist, wobei die Wälzkörper mit ihren Mittelpunkten (8) auf einem Teilkreisradius (R_{T}) angeordnet sind, wobei sich das Halteelement (1) vom Teilkreisradius (R_{T}) aus über mindestens 90 % der Differenz (R_{T} - R_{I}) zwischen Teilkreisradius (R_{T}) und innerem Radius (R_{I}) radial nach innen erstreckt und vom Teilkreisradius (R_{T}) aus über höchstens 50 % der Differenz (R_{A} - R_{T}) zwischen äußerem Radius (R_{A}) und Teilkreisradius (R_{T}) radial nach außen erstreckt,
**dadurch gekennzeichnet, dass**
das Halteelement in seinen axialen Endbereichen Abschnitte (13, 14) aufweist, die zur Anlage der Wälzkörper (2) ausgebildet sind, wobei es in einem axialen Mittenbereich (15) zwischen den Abschnitten (13, 14) zumindest teilweise gegenüber der Wälzkörperoberfläche zurückgesetzt und ausgespart ist, wobei der Mittenbereich (15) in Richtung des Umfangs (U) des Wälzlagers (4) gesehen eine bogenförmige Ausgestaltung (18) aufweist, wobei der Bogen der bogenförmigen Ausgestaltung (18) vorzugsweise ein Kreisbogen ist.

2. Wälzlager nach Anspruch 1, **dadurch gekennzeichnet, dass** sich das Halteelement(1) vom Teilkreisradius (R_{T}) aus über 100 % der Differenz (R_{T} - R_{I}) zwischen Teilkreisradius (R_{T}) und innerem Radius (R_{I}) radial nach innen erstreckt.

3. Wälzlager nach Anspruch 1 oder 2, **dadurch gekennzeichnet, dass** das Halteelement (1) an seinen den Wälzkörpern (2) zugewandten Seiten konkave kreisbogenförmige Anlageflächen (9) für die Wälzkörper (2) aufweist, die einen geringfügig größeren Krümmungsradius aufweisen als der Radius (R_{W}) der Wälzkörper (2), wobei der Krümmungsradius der Anlageflächen (9) vorzugsweise 110 % bis 125 % des Radius (R_{W}) der Wälzkörper (2) entspricht.

4. Wälzlager nach Anspruch 3, **dadurch gekennzeichnet, dass** in die konkaven kreisbogenförmigen Anlageflächen (9) mindestens eine Ausnehmung (10) eingebracht ist, wobei die Ausnehmung (10) in Richtung des Umfangs (U) des Wälzlagers (4) gesehen vorzugsweise eine rechteckförmige Gestalt aufweist.

5. Wälzlager nach einem der Ansprüche 1 bis 4, **dadurch gekennzeichnet, dass** das Halteelement (1) in seinem der Innenringlautbahn (6) zugewandten Bereich zumindest teilweise eine konkave Form (11) aufweist, wobei die konkave Form (11) einen Krümmungsradius aufweist, der vorzugsweise kleiner ist als der innere Radius (R_{I}) der Imenringlaufbahn (6).

6. Wälzlager nach Anspruch 5, **dadurch gekennzeichnet, dass** in dem Bereich der konkaven Form (11) mindestens eine Kavität (12) ausgebildet ist, wobei die Kavität (12) in radiale Richtung betrachtet vorzugsweise eine rechteckige Form aufweist.

7. Wälzlager nach einem der Ansprüche 1 bis 6, **dadurch gekennzeichnet, dass** der Mittenbereich (15) als Steg (16) ausgebildet ist, der die beiden Abschnitte (13, 14) miteinander verbindet.

8. Wälzlager nach Anspruch 7, **dadurch gekennzeichnet, dass** der Steg (16) über einen Teil seiner radialen Höhe, vorzugsweise höchstens über die Hälfte seiner radialen Höhe, einen Abschnitt (17) aufweist, der zur Anlage der Wälzkörper (2) ausgebildet ist.

9. Wälzlager nach einem der Ansprüche 1 bis 8, **dadurch gekennzeichnet, dass** das Halteelement (1) aus Kunststoff besteht, insbesondere aus Polyamid (PA) oder Polyetheretherketon (PEEK) oder Polphthalamid (PPA).

10. Wälzlager nach Anspruch 9, **dadurch gekennzeichnet, dass** in das Kunststoffmaterial Verstärkungselemente eingelagert sind.

11. Wälzlager nach Anspruch 10, **dadurch gekennzeichnet, dass** die Verstärkungselemente Glaskugeln oder Glasfasern sind.

12. Wälzlager nach einem der Ansprüche 1 bis 11, **dadurch gekennzeichnet, dass** das Halteelement (1) in einem Spritzgießverfahren als einstückiges Teil hergestellt ist.

13. Wälzlager nach einem der Ansprüche 1 bis 12, **dadurch gekennzeichnet, dass** es ein Zylinderrollenlager ist.

## Claims

1. Rolling bearing (3) having a retaining element (1) arranged between in each case two adjacent rolling bodies (2), wherein the rolling bodies (2) are arranged between an inner ring (4) and an outer ring (5) of the rolling bearing (3), wherein the inner ring (4) has an inner ring raceway (6) with an inner radius (R_{I}), wherein the outer ring (5) has an outer ring raceway (7) with an outer radius (R_{A}), wherein the rolling bodies are arranged with their central points (8) on a pitch circle radius (R_{T}), wherein the retaining element (1) extends from the pitch circle radius (R_{T}) radially inward over at least 90% of the difference (R_{T} - R_{I}) between the pitch circle radius (R_{T}) and the inner radius (R_{I}), and extends from the pitch circle radius (R_{T}) radially outward over at most 50% of the difference (R_{A} - R_{T}) between the outer radius (R_{A}) and the pitch circle radius (R_{T}),
**characterized in that**
the retaining element, in its axial end regions, has portions (13, 14) which are designed for the abutment of the rolling bodies (2), wherein, in an axial central region (15) between the portions (13, 14), said retaining element is at least partially set back and recessed in relation to the rolling body surface, wherein the central region (15) has, as viewed in the direction of the circumference (U) of the rolling bearing (4), an arc-shaped design (18), wherein the arc of the arc-shaped design (18) is preferably a circular arc.

2. Rolling bearing according to Claim 1, **characterized in that** the retaining element (1) extends from the pitch circle radius (R_{T}) radially inward over 100% of the difference (R_{T} - R_{I}) between the pitch circle radius (R_{T}) and the inner radius (R_{I}).

3. Rolling bearing according to Claim 1 or 2, **characterized in that** the retaining element (1), on its side facing toward the rolling bodies (2), has concave, circular-arc-shaped contact surfaces (9) for the rolling bodies (2), said contact surfaces (9) having a slightly larger radius of curvature than the radius (R_{W}) of the rolling bodies (2), wherein the radius of curvature of the contact surfaces (9) corresponds preferably to 110% to 125% of the radius (R_{W}) of the rolling bodies (2).

4. Rolling bearing according to Claim 3, **characterized in that** at least one recess (10) is formed into the concave, circular-arc-shaped contact surfaces (9), wherein the recess (10) preferably has a rectangular shape as viewed in the direction of the circumference (U) of the rolling bearing (4).

5. Rolling bearing according to one of Claims 1 to 4, **characterized in that** the retaining element (1) at least partially has a concave shape (11) in its region facing towards the inner ring raceway (6), wherein the concave shape (11) has a radius of curvature which is preferably smaller than the inner radius (R_{I}) of the inner ring raceway (6) .

6. Rolling bearing according to Claim 5, **characterized in that** at least one cavity (12) is formed in the region of the concave shape (11), wherein the cavity (12) preferably has a rectangular shape as viewed in a radial direction.

7. Rolling bearing according to one of Claims 1 to 6, **characterized in that** the central region (15) is in the form of a web (16) which connects the two portions (13, 14) to one another.

8. Rolling bearing according to Claim 7, **characterized in that** the web (16) has, over a part of its radial height, preferably at most over half of its radial height, a portion (17) which is designed for the abutment of the rolling bodies (2).

9. Rolling bearing according to one of Claims 1 to 8, **characterized in that** the retaining element (1) is composed of plastic, in particular of polyamide (PA) or polyetheretherketone (PEEK) or polyphthalamide (PPA).

10. Rolling bearing according to Claim 9, **characterized in that** reinforcement elements are embedded into the plastics material.

11. Rolling bearing according to Claim 10, **characterized in that** the reinforcement elements are glass balls or glass fibres.

12. Rolling bearing according to one of Claims 1 to 11, **characterized in that** the retaining element (1) is produced as a single-piece part in an injection moulding process.

13. Rolling bearing according to one of Claims 1 to 12, **characterized in that** it is a cylinder-roller bearing.

## Revendications

1. Palier à roulement (3) comprenant un élément de retenue (1) disposé entre à chaque fois deux corps de roulement adjacents (2), les corps de roulement (2) étant disposés entre une bague interne (4) et une bague externe (5) du palier à roulement (3), la bague interne (4) présentant une piste de roulement de bague interne (6) de rayon interne (R_{I}), la bague externe (5) présentant une piste de roulement de bague externe (7) de rayon externe (R_{A}), les corps de roulement étant disposés avec leurs centres (8) sur un rayon de cercle partiel (R_{T}), l'élément de retenue (1) s'étendant depuis le rayon de cercle partiel (R_{T}) sur au moins 90 % de la différence (R_{T} - R_{I}) entre le rayon de cercle partiel (R_{T}) et le rayon interne (R_{I}) radialement vers l'intérieur, et depuis le rayon de cercle partiel (R_{T}) sur au maximum 50 % de la différence (R_{A} - R_{T}) entre le rayon externe (R_{A}) et le rayon de cercle partiel (R_{T}) radialement vers l'extérieur,
**caractérisé en ce que**
l'élément de retenue présente dans ses régions d'extrémité axiales des portions (13, 14) qui sont réalisées de manière à s'appliquer contre les corps de roulement (2), et est ramené en arrière et évidé dans une région centrale axiale (15) entre les portions (13, 14) au moins en partie par rapport à la surface des corps de roulement, la région centrale (15), vue dans la direction de la périphérie (U) du palier à roulement (4), présentant une configuration arquée (18), l'arc de la configuration arquée (18) étant de préférence un arc de cercle.

2. Palier à roulement selon la revendication 1, **caractérisé en ce que** l'élément de retenue (1) s'étend depuis le rayon de cercle partiel (R_{T}) sur 100 % de la différence (R_{T} - R_{I}) entre le rayon de cercle partiel (R_{T}) et le rayon interne (R_{I}) radialement vers l'intérieur.

3. Palier à roulement selon la revendication 1 ou 2, **caractérisé en ce que** l'élément de retenue (1) présente, sur ses côtés tournés vers les corps de roulement (2), des surfaces d'appui (9) en forme d'arc de cercle concaves pour les corps de roulement (2), lesquelles présentent un rayon de courbure légèrement supérieur au rayon (R_{W}) des corps de roulement (2), le rayon de courbure des surfaces d'appui (9) correspondant de préférence à 110 % à 125 % du rayon (R_{W}) des corps de roulement (2).

4. Palier à roulement selon la revendication 3, **caractérisé en ce qu'**au moins un évidement (10) est pratiqué dans les surfaces d'appui (9) en forme d'arc de cercle concaves, l'évidement (10), vu dans la direction de la périphérie (U) du palier à roulement (4), présentant de préférence une configuration rectangulaire.

5. Palier à roulement selon l'une quelconque des revendications 1 à 4, **caractérisé en ce que** l'élément de retenue (1) présente, dans sa région tournée vers la piste de roulement de bague interne (6), au moins en partie une forme concave (11), la forme concave (11) présentant un rayon de courbure qui est de préférence plus petit que le rayon interne (R_{I}) de la piste de roulement de bague interne (6).

6. Palier à roulement selon la revendication 5, **caractérisé en ce que** dans la région de la forme concave (11) est réalisée au moins une cavité (12), la cavité (12), vue dans la direction radiale, présentant de préférence une forme rectangulaire.

7. Palier à roulement selon l'une quelconque des revendications 1 à 6, **caractérisé en ce que** la région centrale (15) est réalisée sous forme de nervure (16) qui relie l'une à l'autre les deux portions (13, 14).

8. Palier à roulement selon la revendication 7, **caractérisé en ce que** la nervure (16) présente, sur une partie de sa hauteur radiale, de préférence sur au maximum la moitié de sa hauteur radiale, une portion (17) qui est réalisée pour s'appliquer contre les corps de roulement (2).

9. Palier à roulement selon l'une quelconque des revendications 1 à 8, **caractérisé en ce que** l'élément de retenue (1) se compose de plastique, en particulier de polyamide (PA) ou de polyéther éthercétone (PEEK) ou de polyphtalamide (PPA).

10. Palier à roulement selon la revendication 9, **caractérisé en ce que** des éléments de renforcement sont incorporés dans le matériau en plastique.

11. Palier à roulement selon la revendication 10, **caractérisé en ce que** les éléments de renforcement sont des billes de verre ou des fibres de verre.

12. Palier à roulement selon l'une quelconque des revendications 1 à 11, **caractérisé en ce que** l'élément de retenue (1) est fabriqué dans un procédé de moulage par injection sous forme de pièce d'un seul tenant.

13. Palier à roulement selon l'une quelconque des revendications 1 à 12, **caractérisé en ce qu'**il s'agit d'un palier à rouleaux cylindriques.
